# EUROPEAN PATENT SPECIFICATION

(11) **EP 1 312 019 B1**
(45) Date of publication and mention of the grant of the patent: **16.03.2005**
(21) Application number: 01960278.8
(22) Date of filing: 07.06.2001
(51) Int. Cl.: G06F 17/60

(54) **METHOD AND APPARATUS FOR RECEIPT, STORAGE AND VERIFICATION OF ELECTRONIC RECEIPT**
VERFAHREN UND VORRICHTUNG ZUM EMPFANGEN, SPEICHERN UND VERIFIZIEREN ELEKTRONISCHER QUITTUNGEN
PROCEDE ET APPAREIL DE RECEPTION, DE STOCKAGE ET DE VERIFICATION DE RECU ELECTRONIQUE

(30) Priority: 09.06.2000 US 210702 P; 03.11.2000 US 706278
(43) Date of publication of application: 21.05.2003
(73) Proprietor: Telefonaktiebolaget LM Ericsson (publ), 164 83 Stockholm (SE)
(72) Inventor: HEDEAS, Urban, S-654 69 Karlstad (SE); LIND, Patric, S-224 73 Lund (SE); LJUNGQVIST, Per, S-655 93 Karlstad (SE)
(74) Representative: Petri, Stellan
(86) International application number: PCT/EP2001/006434
(87) International publication number: WO 2001/095170

(56) References cited:
- WO-A-01/14995
- WO-A-01/31535
- WO-A-01/86538
- WO-A-99/16029
- US-A- 6 067 529
- US-A1- 2001 029 484

## Description

### TECHNICAL FIELD

The present invention relates to e-commerce transactions, and more particularly, to the storage and verification of an electronic receipt within an e-commerce transaction.

### BACKGROUND OF THE INVENTION

The increased popularity of the Internet and wireless electronic devices have provided expanded opportunities for individuals to utilize their electronic devices to store purchasing information such as credit card numbers or electronic banking card numbers for use in transactions at a store or over the Internet. Within the wireless telephone area, this type of information, which may interact with a merchant, is referred to as a "phone wallet". The problem with these electronic and cashless transactions between a mobile terminal of a user and server equipment of a merchant arises from the difficulty in confirming whether or not a receipt has been provided for the transaction.

The receipt is, of course, important for enabling returns of purchased merchandise or to achieve warranty service. Present solutions involve providing the purchaser with a written copy of a receipt after the transaction is completed. A written receipt defeats the ease desired of an electronic commerce transaction and the limiting of the paperwork associated therewith. Therefore, there exists a need for a manner of providing a user with an electronic receipt in a secure and efficient manner that overcome the problems discussed above.

WO-A-9916029 relates to an equipment and method for acknowledging a transaction in an electronic payment system, comprising first processing means for providing electronic receipts corresponding to payments, second processing means for receiving the receipts, and transfer means for transferring the receipts between the first and second processing means. It is further disclosed that a receipt is generated by a cellular and sent via a local area network to a short message service centre, from which it is sent as a short message via the mobile telephone system to the mobile station. Hence, the whole receipt message is sent to the mobile station, and the buyer is informed about that the receipt has been received in the mobile station. To prevent counterfeiting the receipt has to be encrypted before it is sent to the recipient.

### SUMMARY OF THE INVENTION

The present invention as defined in claims 1 and 7 overcomes the foregoing and other problems with a method and system for obtaining an electronic receipt for a transaction between a mobile terminal and a merchant. Upon performance of an electronic transaction between a mobile terminal and a merchant, the mobile terminal provides the merchant with an address associated with a remote computer which stores electronic receipts for the mobile terminal. The merchant generates an electronic receipt and transmits the receipt to the provided address of the remote computer over a network such as the Internet. The electronic receipt is received and stored at the remote computer indicated by the provided address. In response to the received electronic receipt, the remote computer generates a notification to the mobile terminal indicating that the electronic receipt has been received from the merchant. Upon receipt of the notification at the mobile terminal, the user may complete the transaction.

### BRIEF DESCRIPTION OF THE DRAWINGS

A more complete understanding of the method and apparatus of the present invention may be obtained by reference to the following Detailed Description when taken in conjunction with the accompanying Drawings wherein:
FIGURE 1 is a block diagram illustrating an electronic commerce transaction taking place between a mobile terminal, a merchant and a remote computer according to the method of the present invention; and
FIGURE 2 is a flow diagram illustrating the method for provision of an electronic receipt according to the present invention.

### DETAILED DESCRIPTION

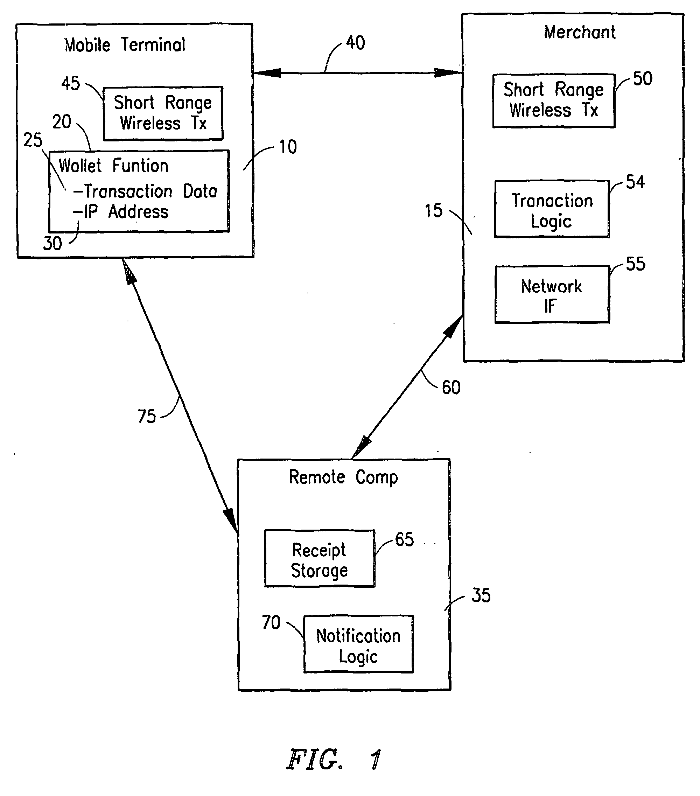

Referring now to the drawings, and more particular to FIGURE 1, there is illustrated a functional block diagram of an electronic commerce transaction taking place between a mobile terminal 10 of a user and a merchant 15. The mobile terminal 10 consists of any portable electronic device which may be carried by a user to a point of sale location to assist in a purchase transaction. Examples of mobile terminals 10 might include a mobile telephone, satellite telephone, laptop computer, personal digital assistant, pager, etc. The mobile terminal 15 includes a wallet functionality 20 which includes transaction data 25 necessary for completing a transaction with the merchant 15. The transaction data 25 might include a credit card number, electronic banking card number, password or other information of this type necessary to carry out a transaction. Additionally, the wallet functionality 20 includes an address 30, for example an IP address, pointing to a location of a remote computer wherein an electronic transaction receipt may be stored as will be more fully discussed in a moment. While the address 30 is illustrated as being part of the wallet functionality 20 it should, of course, be realized that the address 30 could be stored within any location of the mobile terminal 20, for example, a SIM card or other memory.

The mobile terminal 20 communicates with the merchant 15 over a short range wireless communications link 40. The short range wireless communications link 40 is generated using a short range wireless transceiver 45 included within the mobile terminal 20. In a preferred embodiment, the short range wireless transceiver 45 utilizes the Bluetooth communications protocol for the short range wireless communications link 40 between the mobile terminal 10 and the merchant 15. Other types of short range wireless communication between the mobile terminal and merchant, such as RF or infrared, may also be used. All transactions between the mobile terminal 10 and merchant 15 are secured according to the MeT standard or any other secure standard. The communications may use, for example, techniques disclosed in, "Using Electronic ID Cards - a Guide for Users and Application Developers", Secured Electronic Information Society, ISBN 91-973 430-1-3,which is incorporated herein by reference.

The merchant 15 will comprise some type of server or computer configuration. The merchant 15 also includes a short range wireless transceiver 50 for carrying out its end of communications with the mobile terminal 10 over the short range wireless communications link 40. A network interface 55 enables the merchant 15 to interconnect with a remote computer 35 via a communications link 60. The communications link 60 between the merchant 15 and remote computer 35 may be over any type of network such as a local area network, wide area network or the Internet. The merchant 15 also includes transaction logic 54 which responsive to receipt of payment information from the mobile terminal 10 transmits an electronic receipt from the merchant 15 to the remote computer 35 via the communications link 60.

The remote computer 35 includes a receipt storage area 65 for storing electronic receipts received from the merchant 15 over the communications link 60. These electronic receipts within the receipt storage 65 represent receipts for purchases made by the mobile terminal 10 with a merchant 15. SMT (secure mobile transaction) is utilized to secure the validity of the receipt. The remote computer 35 also includes notification logic 70 which, responsive to receipt of an electronic receipt from the merchant 15, generates a notification to the mobile terminal 10 notifying the mobile terminal that an electronic receipt for a transaction involving the mobile terminal has been received from the merchant 15. This notification to the mobile terminal 10 is transmitted over a communications link 75 (which may comprise a wireline or radio network) between the remote computer 35 and the mobile terminal 10. The communications link 75 may occur over any combination of a public land mobile network (PLMN), wide area network, local area network and Internet network.

In an alternative embodiment, rather than directly transmitting the electronic receipt to the remote computer 35, the transaction logic 54 may transmit the electronic transaction receipt to the mobile terminal 10 via the short range wireless communications link 40. In this case, the electronic transaction receipt may be locally stored within the mobile terminal 10 and transferred to the remote computer 35 at a later point by downloading the receipt from the mobile terminal 10 to the remote computer 35 over communication link 75 or by direct physical download between the mobile terminal 10 and the remote computer 35.

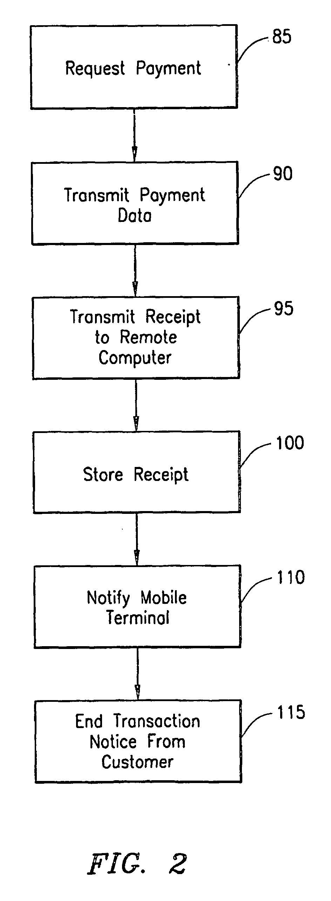

In FIGURE 2, there is illustrated a flow diagram describing an electronic transaction between the mobile terminal 10 and the merchant 15 according to the method of the present invention. After a request for a purchase has been made by a user, the merchant 15 generates a request for payment at step 85 which is transmitted to the mobile terminal 10 including the wallet function 20. Responsive to the request for payment, the wallet function 20 of the mobile terminal 10 causes payment information to be transmitted at step 90 back to the merchant 15 over the short range wireless communications link 40. Within this payment information is included the address 30 of the remote computer 35 to which the electronic receipt must be transmitted.

Upon receipt of the payment information including the address 30 of the remote computer 35, the transaction logic 54 within the merchant 15 generates and transmits the electronic receipt to the remote computer 35 via the communications link 60. Upon receipt of the electronic receipt at the remote computer 35, the receipt is stored at step 100 within the receipt storage area 65, and the notification logic 70 generates a notification to the mobile terminal at step 110. The mobile terminal 10 may then complete the transaction with the merchant 15 by providing an end transaction notice at step 115.

Using the above identified system and method, an individual is able to have a copy of an electronic receipt securely stored within a separate location that is not easily susceptible to loss by the user and to receive a confirmation that a receipt has been provided such that the transaction may be completed.

The previous description is of a preferred embodiment for implementing the invention, and the scope of the invention should not necessarily be limited by this description. The scope of the present invention is instead defined by the following claims.

## Claims

1. A method for obtaining an electronic receipt for a transaction between a mobile terminal and a merchant, comprising the steps of:
performing the transaction between the mobile terminal and the merchant;
transmitting the electronic receipt to a remotely located computer;
receiving the electronic receipt at the remotely located computer; and
storing the electronic receipt at the remotely located computer; **characterised by** the further step of:
transmitting a notification to the mobile terminal from the remotely located computer indicating the electronic receipt has been received and stored in the remotely located computer.

2. The method of Claim 1, further providing the step of providing an address for the remote computer.

3. A method according to claim 1 or 2, wherein:
the electronic receipt is received and stored at a remotely located computer designated by the mobile terminal.

4. A method according to any of the preceding claims, wherein the step of performing the transaction between the mobile terminal and the merchant comprises the step of:
transmitting transaction data to the merchant from the mobile terminal, said transaction data including an address for a remotely located computer to which the electronic receipt for the electronic transaction should be transmitted; and
receiving a notification that the electronic receipt has been received at the remote computer for securing the electronic receipt for the electronic transaction between the mobile terminal and the merchant.

5. The method of Claim 4, further comprising the step of completing the transaction responsive to the notification.

6. The method according to any of the preceding claims wherein:
the electronic receipt is transmitted to the mobile terminal via a shortrange wireless communication link;
the electronic receipt is stored at the mobile terminal; and
the electronic receipt is downloaded from the mobile terminal to the computer.

7. A system for obtaining an electronic receipt for a transaction between a mobile terminal (10) and a merchant (15) **characterised by**
control logic (70) for installation at a remote computer (35), said control logic generating a notification - indicating that the electronic receipt has been received and stored in a storage (65) of the remote computer (35) - of the electronic receipt from a merchant (15); and
a mobile telephone (10) containing an address for the remote computer (35), said mobile telephone providing said address to the merchant (35) during a transaction and receiving the notification generated by the control logic.

8. The system of Claim 7, wherein the address comprises an IP address.

## Patentansprüche

1. Ein Verfahren zum Erhalten eines elektronischen Belegs für eine Transaktion zwischen einem Mobilendgerät und einem Händler, die Schritte umfassend:
Durchführen der Transaktion zwischen dem Mobilendgerät und dem Händler;
Übermitteln des elektronischen Belegs an einen entfernt platzierten Computer;
Empfangen des elektronischen Belegs an dem entfernt platzierten Computer; und
Speichern des elektronischen Belegs an dem entfernt platzierten Computer; **gekennzeichnet durch** den weiteren Schritt zum:
Übermitteln einer Mitteilung an das Mobilendgerät von dem entfernt platzierten Computer, die anzeigt, dass der elektronische Beleg empfangen und in dem entfernt platzierten Computer gespeichert worden ist.

2. Das Verfahren nach Anspruch 1, das weiterhin den Schritt bereitstellt zum Bereitstellen einer Adresse für den entfernten Computer.

3. Ein Verfahren gemäß Anspruch 1 oder 2, wobei der elektronische Beleg an einem durch das Mobilendgerät bezeichneten entfernt platzierten Computer empfangen und gespeichert wird.

4. ein Verfahren gemäß einem der vorhergehenden Ansprüche, wobei der Schritt zum Durchführen der Transaktion zwischen dem Mobilendgerät und dem Händler den Schritt umfasst zum:
Übermitteln von Transaktionsdaten von dem Mobilendgerät an den Händler, wobei die Transaktionsdaten eine Adresse für einen entfernt platzierten Computer einschließen, an den der elektronische Beleg für die elektronische Transaktion übermittelt werden soll; und
Empfangen einer Mitteilung, dass der elektronische Beleg zum Sichern des elektronischen Belegs für die elektronische Transaktion zwischen dem Mobilendgerät und dem Händler an dem entfernten Computer empfangen worden ist.

5. Das Verfahren nach Anspruch 4, weiterhin den Schritt umfassend zum Vervollständigen der Transaktion als Reaktion auf die Mitteilung.

6. Das Verfahren gemäß einem der vorhergehenden Ansprüche, wobei:
der elektronische Beleg an das Mobilendgerät über eine drahtlose Nahbereichs-Kommunikationsverbindung übermittelt wird;
der elektronische Beleg an dem Mobilendgerät gespeichert wird; und
der elektronische Beleg von dem Mobilendgerät auf den Computer heruntergeladen wird.

7. Ein System zum Erhalten eines elektronischen Belegs für eine Transaktion zwischen einem Mobilendgerät (10) und einem Händler (15), **gekennzeichnet durch**
eine Steuerungslogik (70) für eine Installierung auf einem entfernten Computer (35), wobei die Steuerungslogik eine Mitteilung des elektronischen Belegs von einem Händler (15) erzeugt, die anzeigt, dass der elektronische Beleg in einem Speicher (65) des entfernten Computers (35) empfangen und gespeichert worden ist; und
ein eine Adresse für den entfernten Computer (35) enthaltendes mobiles Telefon (10), wobei das mobile Telefon die Adresse während einer Transaktion an den Händler (35) bereitstellt, und die **durch** die Steuerungslogik erzeugte Mitteilung empfängt.

8. Das System gemäß Anspruch 7, wobei die Adresse eine IP-Adresse umfasst.

## Revendications

1. Procédé pour obtenir un reçu électronique pour une transaction entre un terminal mobile et un commerçant, comprenant les étapes qui consistent :
à effectuer la transaction entre le terminal mobile et le commerçant ;
à émettre le reçu électronique vers un ordinateur situé à distance ;
à recevoir le reçu électronique au niveau de l'ordinateur situé à distance ; et
à stocker le reçu électronique au niveau de l'ordinateur situé à distance ; **caractérisé par** l'autre étape qui consiste :
à émettre une notification vers le terminal mobile depuis l'ordinateur situé à distance, indiquant que le reçu électronique a été reçu et est stocké dans l'ordinateur situé à distance.

2. Procédé selon la revendication 1, comprenant en outre l'étape qui consiste à fournir une adresse pour l'ordinateur à distance.

3. Procédé selon la revendication 1 ou 2, dans lequel :
le reçu électronique est reçu et stocké au niveau d'un ordinateur situé à distance désigné par le terminal mobile.

4. Procédé selon l'une quelconque des revendications précédentes, dans lequel l'étape d'exécution de la transaction entre le terminal mobile et le commerçant comprend l'étape qui consiste :
à transmettre des données de transaction du terminal mobile au commerçant, lesdites données de transaction comprenant une adresse pour un ordinateur situé à distance auquel le reçu électronique pour la transaction électronique doit être transmis ; et
à recevoir une notification indiquant que le reçu électronique a été reçu au niveau de l'ordinateur à distance pour sécuriser le reçu électronique pour la transaction électronique entre le terminal mobile et le commerçant.

5. Procédé selon la revendication 4, comprenant en outre l'étape qui consiste à achever la transaction en réponse à la notification.

6. Procédé selon l'une quelconque des revendications précédentes, dans lequel :
le reçu électronique est transmis au terminal mobile par l'intermédiaire d'une liaison de communication sans fil sur courte distance ;
le reçu électronique est stocké au terminal mobile ; et
le reçu électronique est téléchargé du terminal mobile vers l'ordinateur.

7. Système pour obtenir un reçu électronique pour une transaction entre un terminal mobile (10) et un commerçant (15), **caractérisé par**
une logique (70) de commande destinée à une installation au niveau d'un ordinateur éloigné (35), ladite logique de commande générant une notification - indiquant que le reçu électronique a été reçu et est stocké dans une mémoire (65) de l'ordinateur éloigné (35) - du reçu électronique provenant d'un commerçant (15) ;
un téléphone mobile (10) contenant une adresse pour l'ordinateur à distance (35), ledit téléphone mobile fournissant ladite adresse au commerçant (35) pendant une transaction et recevant la notification générée par la logique de commande.

8. Système selon la revendication 7, dans lequel l'adresse comprend une adresse IP.
